# FASCICULE DE BREVET EUROPEEN

(11) **EP 3 191 292 B1**
(45) Date de publication et mention de la délivrance du brevet: **12.09.2018**
(21) Numéro de dépôt: 15738938.8
(22) Date de dépôt: 21.07.2015
(51) Int. Cl.: B29D 30/06

(54) **MOULE DE VULCANISATION POUR PNEUMATIQUE A FERMETURE OPTIMISEE**
REIFENVULKANISIERFORM MIT OPTIMIERTEM VERSCHLUSS
TIRE VULCANIZING MOULD HAVING OPTIMIZED CLOSING FEATURES

(30) Priorité: 25.07.2014 FR 1457203
(43) Date de publication de la demande: 19.07.2017
(73) Titulaire: Compagnie Générale des Etablissements Michelin, 63000 Clermont-Ferrand (FR)
(72) Inventeur: DEFAISSE, Christian, F-63040 Clermont-Ferrand Cedex 9 (FR)
(74) Mandataire: Noel, Luminita
(86) Numéro de dépôt international: PCT/EP2015/066636
(87) Numéro de publication internationale: WO 2016/012443

(56) Documents cités:
- EP-A1- 1 647 383
- WO-A1-93/24309
- US-A- 3 922 122
- US-A- 4 931 004
- US-A- 5 814 263

## Description

L'invention concerne le domaine de la fabrication des pneumatiques, et plus particulièrement le domaine des moules destinés à la vulcanisation.

De manière connue dans l'industrie du pneumatique, les pièces mobiles du moule de cuisson forment une enceinte rigide destinée à mouler la partie externe du pneumatique ainsi qu'à transmettre au pneumatique l'énergie thermique nécessaire à la réaction de vulcanisation.

Cette enceinte comprend en règle générale deux plateaux se déplaçant axialement et supportant des coquilles, destinées à mouler les flancs du pneumatique. Des segments résistants en forme d'arc se déplaçant dans la direction radiale portent chacun un élément moulant destiné à mouler la bande de roulement. Les différentes pièces du moule sont assemblées et animées par une cinématique appropriée en relation avec la presse de cuisson.

On utilise généralement pour fermer radialement les secteurs sur l'ébauche de pneumatique, une couronne externe mobile axialement qui agit sur des portées tronconiques des secteurs. En position fermée du moule, la couronne vient en appui sur le dos radialement externe des secteurs et maintient les éléments moulants les uns contre les autres. Les coquilles sont rapprochées axialement l'une vers l'autre et portent sur chacune des faces axialement opposées des éléments moulants de manière à former une surface interne de moulage continue. Lors de l'ouverture du moule, les secteurs reculent radialement sous l'action de la couronne, et les plateaux sont éloignés axialement l'un de l'autre pour permettre l'extraction du pneumatique de l'enceinte de vulcanisation.

La presse de cuisson ne contrôle pas seulement le mouvement radial des secteurs, mais également le mouvement d'ouverture et de fermeture du moule et de ce fait, doit avoir une structure robuste et fournir des efforts importants notamment pour maintenir le moule fermé pendant la cuisson du pneu qui se fait à des pressions élevées. Lors de la cuisson, la pression à l'intérieur du moule a tendance à écarter les secteurs, avec des conséquences négatives sur la qualité du moulage (par exemple des bavures apparaissent entre les secteurs au moulage). Afin de garantir la fermeture du moule surtout à des pressions élevées, il faut adapter l'effort fourni par la presse à la pression à l'intérieur du pneu, ce qui implique l'utilisation d'une presse encombrante et chère ou encore d'une presse pour chaque moule, ce qui s'avère encore moins économique.

Une solution à ce problème a été décrite dans le document US 3 922 122 dans lequel la couronne de fermeture des secteurs moulants prend appui sur le plateau inférieur de la presse moyennant des rondelles rigides réglables en hauteur. La hauteur des rondelles est choisie de manière à ce que, lors de la fermeture du moule quand les secteurs sont amenés au contact de la couronne, des forces situées à l'interface entre la couronne et les secteurs provoquent des déformations élastiques appliquées aux secteurs. Ces forces à l'origine des déformations élastiques des secteurs s'opposent aux mouvements radiaux vers l'extérieur provoquées par la pression à l'intérieur du moule et assurent le maintien en position fermée des secteurs. Toutefois, il faut procéder à un réglage en hauteur des rondelles lors du changement du moule avec des conséquences sur la productivité.

Une autre solution a été décrite dans le document EP 1 647 383 dans lequel la couronne de fermeture des secteurs est montée sur le plateau supérieur de la presse de vulcanisation moyennant des boitiers à rondelles élastiques répartis sur sa circonférence. En fonctionnement, les rondelles des boîtiers s'écrasent lors de la fermeture du moule pour permettre une adaptation de l'effort de serrage par déformation élastique de la couronne de fermeture. La couronne se déforme élastiquement et s'allonge selon la direction de l'effort en provenance des boîtiers élastiques à chaque cycle de cuisson.

Le document US 5814263 - A révèle un moule comprenant une pluralité de secteurs pour le moulage de l'extérieur de la bande de roulement du pneumatique, secteurs qui sont mobiles radialement entre une position d'ouverture et une position de fermeture du moule, ces secteurs ayant des portées tronconiques placées radialement à l'extérieur et une couronne externe mobile axialement qui agit sur les portées tronconiques placées radialement extérieurement desdits secteurs pour assurer leur fermeture et leur recul à partir de leur position de fermeture dans le moule.

Dans les solutions connues de ces documents, les efforts utilisés pour contraindre à chaque cycle les rondelles sont des efforts supplémentaires qui doivent être fournis par la presse de cuisson. De surcroît, les sollicitations des pièces de fermeture du moule ont lieu à chaque cycle de cuisson et de telles sollicitations cycliques provoquent une usure par fatigue des pièces et ont des conséquences négatives sur la durée de vie du moule.

Le but de l'invention est de fournir un moule apte à remédier à ces inconvénients, tout en étant apte à fonctionner avec des efforts moindres en provenance de la presse de vulcanisation.

Le but de l'invention est atteint avec un moule de vulcanisation pour pneumatique comme défini dans la revendication 1, comprenant :
- une pluralité de secteurs pour le moulage de l'extérieur de la bande de roulement du pneumatique qui sont mobiles radialement entre une position d'ouverture et une position de fermeture du moule, ces secteurs ayant des portées tronconiques placées radialement à l'extérieur et
- une couronne externe mobile axialement mobile axialement qui agit sur les portées tronconiques placées radialement extérieurement desdits secteurs pour assurer leur fermeture et leur recul à partir de leur position de fermeture dans le moule.

Le moule est caractérisé en ce que ladite couronne externe est précontrainte radialement vers l'intérieur en position d'ouverture du moule.

Ainsi, dans le moule de l'invention on applique une précontrainte permanente à la couronne externe lors de sa fabrication. On peut par exemple réaliser une couronne sous forme d'un assemblage de deux pièces à ajustement serré. La précontrainte imprimée à la couronne externe est dirigée radialement vers l'intérieur du moule pour s'opposer aux efforts générés dans l'interface avec les secteurs par la pression interne dans l'enceinte de cuisson de celui-ci. De la sorte, pour une même pression interne, la presse doit fournir un effort de fermeture moindre que celui nécessaire dans les solutions connues de l'état de la technique.

Des formes préférentielles de l'invention sont définies dans le revendications 2 à 10.

Avantageusement, la couronne externe est un assemblage par frettage, pour des facilités d'obtention et des qualités de robustesse de l'ensemble fretté.

De préférence, la pression de frettage est supérieure à la pression interne de cuisson. A titre d'exemple elle est comprise entre 4 et 6 N/mm². Ceci permet d'assurer un effort de précontrainte suffisant pour la couronne du moule de cuisson, tout en évitant un éclatement de la frette.

Dans un premier mode de réalisation de l'invention, le moule comporte un tube cylindrique rigide fretté autour de ladite couronne. Cette solution est simple à mettre en oeuvre, par exemple par chauffage du tube avant son montage sur la couronne.

Dans une variante de l'invention, le moule comporte un câble tendu enroulé autour de ladite couronne. Ceci permet d'enrouler le câble sur une hauteur donnée et selon un motif prédéterminé. L'avantage de cette solution est de pouvoir fournir des efforts importants avec un câble qui présente un faible poids.

De préférence, l'angle d'inclinaison de ladite portée tronconique de la couronne externe compris entre 6° à 20°. Lors des tests effectués en laboratoire, il a été constaté que pour un angle inférieur à 6°, l'assemblage devient coinçant et pour que, à partir de 20° la composante verticale de l'effort dû à la pression interne devient très importante.

Dans un deuxième mode de réalisation de l'invention, on imprime une contrainte à la couronne externe en réalisant un assemblage cône contre cône. Ceci présente l'avantage d'une faisabilité sans chauffage d'un des composants.

De préférence, l'angle d'inclinaison du cône est compris entre 3 et 25° afin de restituer un maximum d'effort via le cône sur la couronne externe du moule, compte tenu du coefficient de frottement à l'interface des deux pièces coniques de l'assemblage.

Avantageusement, le moule comprend des moyens de réglage de la valeur de la précontrainte. Ceci permet d'ajuster la valeur de la précontrainte en fonction de la pression interne du moule.

De préférence, le moule comporte deux plateaux se déplaçant axialement et supportant des coquilles, destinées à mouler les flancs du pneumatique. On peut, certes, appliquer la solution de l'invention à un moule de rechapage de bande de roulement qui ne présente pas de coquilles latérales destinées à mouler les flancs du pneumatique. Dans une variante préférée de l'invention, le moule est un moule de fabrication de pneumatique à partir d'une ébauche crue renfermée à l'intérieur d'un moule de vulcanisation.

Les buts de l'invention sont également atteints avec un procédé comme défini dans la revendication 11, pour le moulage d'une ébauche de pneumatique avec un moule de l'invention dans lequel on applique une précontrainte à la couronne externe avant de fermer le moule.

L'invention sera mieux comprise grâce à la suite de la description, qui s'appuie sur les figures suivantes :
- la figure 1 est une vue en coupe du moule selon un premier mode de réalisation de l'invention réalisée avec un plan vertical passant par l'axe de symétrie du moule. ;
- la figure 2 est une vue en coupe du moule selon un deuxième mode de réalisation de l'invention réalisée avec un plan vertical passant par l'axe de symétrie du moule.

Le moule 1 comprend des secteurs 2 comportant des éléments moulants 3 de la surface radialement extérieure de la bande de roulement qui délimitent, avec une coquille supérieure 4 et une coquille inférieure 5 une cavité interne 6. La coquille supérieure 4 et la coquille inférieure 5 sont complétées chacune d'une partie destinée à mouler la zone basse de l'ébauche respectivement 7 et 8. Les éléments moulants 3 sont fixés sur les secteurs 2 moyennant des joncs 9. Les coquilles 4 et 5 sont solidaires chacune d'un plateau supérieur et d'un plateau inférieur de la presse (non illustrés) se déplaçant l'un par rapport à l'autre dans la direction axiale. Le moule ainsi formé présente une symétrie de révolution autour de l'axe X-X'.

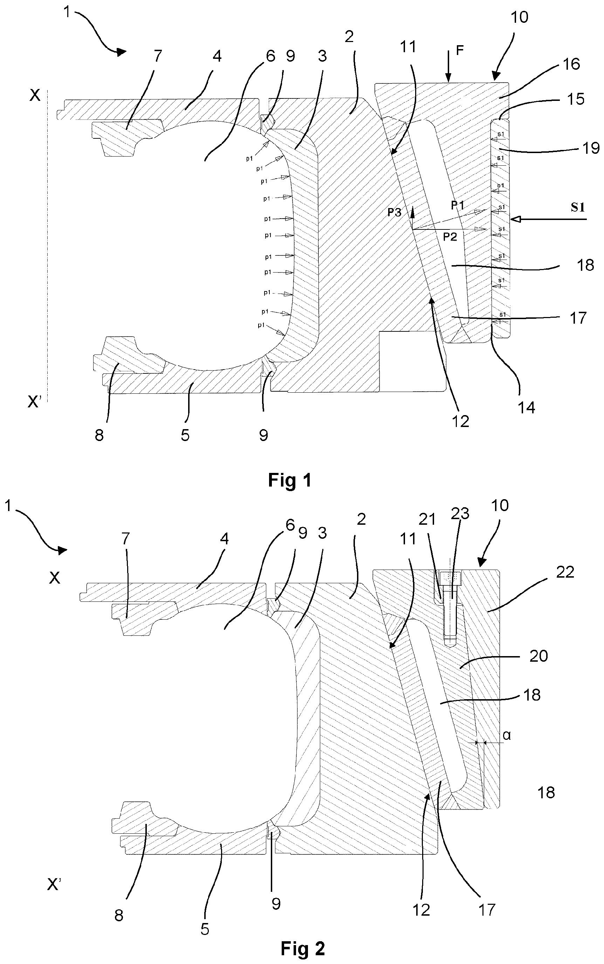

En position fermée du moule, comme cela est illustré à la figure 1, les éléments moulants 3 sont disposés circonférentiellement en contact étroit avec chacune des coquilles pour former une surface de moulage continue. Une membrane de cuisson est agencée dans la cavité interne 6 et fournit, moyennant un fluide caloporteur, les conditions de température T1 et de pression de cuisson p1 de l'ébauche de pneumatique disposée à l'intérieur du moule 1 et plaquée par la membrane de cuisson contre les parties moulantes de celui-ci. A titre d'exemple, la température T1 est comprise entre 120 et 160°C et la pression p1 entre 16 et 24bar (1,6 et 2,4 N/mm²).

Une couronne externe 10 radialement extérieure par rapport aux secteurs 2 est montée à déplacement axial (on comprend selon l'axe X-X' ou parallèlement à celui-ci), elle présente une surface interne tronconique 12 qui vient engager les portées externes tronconiques 11 des secteurs 2. La couronne externe 10, radialement extérieure par rapport aux secteurs 2 et à déplacement axial, assure la fermeture des secteurs 2 en venant engager la portée tronconique radialement à l'extérieur des secteurs. Le déplacement de la couronne externe 10 est réalisé, par exemple, au moyen d'un vérin (non représenté) avec une force d'application F réglable.

Selon l'invention, on applique une précontrainte S1, orientée radialement vers l'intérieur du moule, à la couronne externe 10. Cette précontrainte est permanente et est obtenue lors de la fabrication de la couronne. Dans le mode de réalisation de la figure 1, un tube cylindrique 19 est fretté à chaud autour de la couronne externe 10. Le tube cylindrique 19 est chauffé et emmanché à chaud sur la surface périphérique ou de frettage 14 du corps 16 de la couronne externe 10 jusqu'à venir en butée sur un épaulement 15 de celui-ci.

Dans les exemples illustrés aux figures, la couronne est du type couronne chauffante et contient de la vapeur sous pression. La couronne externe 10 de la figure 1 est ainsi réalisée par assemblage d'un corps 16 ayant une surface externe 14 cylindrique et d'un manchon 17 tronconique, fixé par soudage sur le corps 16, une chambre de circulation de fluide caloporteur 18 étant formée entre les deux. De manière similaire, la couronne externe 10 illustrée à la figure 2 est réalisée par l'assemblage par soudage d'un corps 20 et d'un manchon 17 tronconique définissant une chambre de circulation de fluide caloporteur 18 entre les deux.

Dans l'exemple illustré, le tube cylindrique 19 a une épaisseur de 15mm et la couronne externe un diamètre externe de la surface de frettage 14 de 957mm à température ambiante. Lorsque l'on choisit un tube de frettage en acier et une contrainte de tension de 150N/mm², on obtient un diamètre de frette avant chauffage de 956,3mm qui sera facile à emmancher sur la couronne lorsqu'il est chauffé à une température d'environ 180°C.

Dans une variante, on refroidit la couronne externe 10 à l'azote liquide ou à la glace carbonique pour la contracter et l'engager dans le tube cylindrique 20.

Dans une autre variante de l'invention on réalise un frettage de la couronne externe 10 par enroulement d'un câble métallique tendu autour de la surface de frettage 14 de la couronne. Le câble est enroulé en hélice avec un pas déterminé sur une partie ou la totalité de la hauteur de ladite surface de frettage 14. Des cerclages annulaires ponctuels peuvent également être réalisés de manière à être uniformément répartis sur la hauteur de la zone de frettage 14. La pression de frettage doit être comprise entre 4 et 6 N/mm².

Dans une autre variante, on peut utiliser des fils enrobés de résine à la place des câbles métalliques.

La figure 2 illustre le moule 1 conformément à un deuxième mode de réalisation de l'invention, dans lequel les éléments similaires à ceux de la figure 1 ont gardé le même numéro de référence. Tel que visible à la figure 2, on imprime une contrainte à la couronne externe 10 en réalisant un assemblage cône contre cône déplacés par une vis de réglage. Pour ceci, la couronne externe 10 comprend un corps 20 ayant une surface externe tronconique d'angle d'inclinaison α. Un anneau tronconique 22 ayant une surface interne inclinée d'un même angle α que le corps 20 est emmanché sur la surface externe de ce dernier. Le corps 22 présente une partie protubérante 21 venant s'emboîter sur une partie de frome correspondante du corps 20, le corps 20 et l'anneau 22 étant fixés ensemble par une vis 23. La vis 23 assure le réglage de la position axiale de l'anneau 2 par rapport au corps 20 et par conséquence, le réglage de la valeur de la précontrainte appliquée à la couronne 10.

A titre d'exemple, le corps 16, 22 de la couronne externe 10 est réalisé en un acier soudable, tel le 25CrMo4, ayant les caractéristiques suivantes à la température ambiante : une résistance minimale à la traction de 460 N/mm², une limite d'élasticité minimale de 250 N/mm² et un allongement à la rupture supérieur à 14%. Il en est de même pour le matériau du manchon 17 qui, de plus comporte un traitement de nitruration de sa surface tronconique qui coopère avec celle des secteurs 2. Le tube cylindrique 19 et l'anneau tronconique 22 sont réalisés en un acier ayant des propriétés mécaniques équivalentes à celles du corps de la couronne externe 10.

Le fonctionnement du moule est le suivant : après avoir mis en place dans la cavité interne 6 une ébauche de pneumatique, on ferme le moule par un mouvement progressif d'avance de la couronne externe 10 dû à l'effort de fermeture F en provenance de la presse. La surface interne tronconique 11 de la couronne engage progressivement les portées tronconiques 12 des secteurs 2, ce qui entraîne la fermeture des secteurs et de la cavité interne du moule par déplacement axial du plateau supérieur de la presse. Lors de l'ouverture du moule, la couronne externe 10 avance axialement et les secteurs 2 reculent radialement, puis ils sont entraînés axialement en même temps que le plateau supérieur pour s'écarter du plateau inférieur.

La figure 1 illustre le moule en position de fermeture lors de l'opération de vulcanisation. La résultante des efforts dus à la pression interne p1, qui est la pression que la membrane de cuisson exerce sur l'ébauche de pneumatique, à l'interface entre la couronne et les secteurs, est représentée par P1 sur la figure 1. La résultante P1 a une composante horizontale P2 et une composante verticale P3. L'effort de serrage F de la presse doit être supérieur à la composante verticale P3 pour que le moule reste fermé pendant la cuisson. La direction de l'effort S1 fourni par la précontrainte de la couronne 10 est opposée à celle de l'effort P2 dû à la pression interne du moule. Ceci empêche l'ouverture des secteurs lors de la vulcanisation, ce qui évite l'apparition de défauts de moulage sur le pneumatique. De surcroît, l'effort de serrage F fournit par la presse est moindre, car il doit seulement vaincre l'effort P3.

Les formes d'exécution décrites ci-dessus ne sont bien sûr pas limitatives et l'homme du métier pourra envisager d'autres moyens équivalents permettant d'imprimer une contrainte à la couronne externe du moule. Ainsi, à la place du tube cylindrique monté par frettage, on peut utiliser un tube cylindrique fendu associé à des moyens de serrage circonférentiel autour de la surface externe de la couronne.

On peut par ailleurs envisager un assemblage avec plusieurs frettes successives, identiques ou différentes.

La solution de l'invention s'applique aussi bien aux moules de fabrication de pneumatiques ou de bandes de roulement annulaires pour le rechapage de pneumatiques.

## Revendications

1. Moule (1) de vulcanisation pour pneumatique comprenant
- une pluralité de secteurs (2) pour le moulage de l'extérieur de la bande de roulement du pneumatique qui sont mobiles radialement entre une position d'ouverture et une position de fermeture du moule, ces secteurs ayant des portées tronconiques (11) placées radialement à l'extérieur et
- une couronne externe (10) mobile axialement qui agit sur les portées tronconiques placées radialement extérieurement desdits secteurs (2) pour assurer leur fermeture et leur recul à partir de leur position de fermeture dans le moule,
**caractérisé en ce que** ladite couronne externe (10) est précontrainte radialement vers l'intérieur en position d'ouverture du moule.

2. Moule selon la revendication 1, **caractérisé en ce que** la couronne externe (10) est un assemblage par frettage.

3. Moule selon la revendication 2, **caractérisé en ce que** la pression de frettage est supérieure à la pression interne de cuisson.

4. Moule selon l'une des revendications 1 à 3, **caractérisé en ce qu'**il comporte un tube cylindrique (19) rigide fretté autour de ladite couronne.

5. Moule selon l'une des revendications 1 à 3, **caractérisé en ce qu'**il comporte un câble tendu enroulé autour de ladite couronne.

6. Moule selon l'une des revendications précédentes, **caractérisé en ce que** l'angle d'inclinaison de ladite portée tronconique (11) est compris entre 6 et 20°.

7. Moule selon l'une des revendications 1 à 3, **caractérisé en ce qu'**on imprime une précontrainte à la couronne externe (10) en réalisant un assemblage cône contre cône.

8. Moule selon la revendication 7, **caractérisé en ce que** l'angle d'inclinaison du cône est compris entre 3 et 25°.

9. Moule selon l'une des revendications 7 ou 8, **caractérisé en ce qu'**il comprend des moyens de réglage de la valeur de la précontrainte.

10. Moule selon l'une des revendications précédentes, **caractérisé en ce qu'**il comporte deux plateaux se déplaçant axialement et supportant des coquilles (4,5) destinées à mouler les flancs du pneumatique.

11. Procédé de moulage d'un pneumatique à l'aide d'un moule selon l'une des revendications 1 à 10, dans lequel on applique une précontrainte à la couronne externe (10) avant de fermer le moule.

## Patentansprüche

1. Reifenvulkanisierform (1), umfassend:
- mehrere Sektoren (2) zum Formen der Außenseite der Lauffläche des Reifens, die zwischen einer Öffnungsposition und einer Schließposition der Form radial beweglich sind, wobei diese Sektoren kegelstumpfförmige Ausladungen (11) aufweisen, die radial an der Außenseite angeordnet sind, und
- einen axial beweglichen äußeren Kranz (10), der auf die kegelstumpfförmigen Ausladungen, die radial außerhalb der Sektoren (2) angeordnet sind, einwirkt, um ihr Schließen und ihr Zurückgehen aus ihrer Schließposition in der Form zu gewährleisten,
**dadurch gekennzeichnet, dass** der äußere Kranz (10) in der Öffnungsposition der Form radial nach innen vorgespannt ist.

2. Form nach Anspruch 1, **dadurch gekennzeichnet, dass** der äußere Kranz (10) eine Schrumpfanordnung ist.

3. Form nach Anspruch 2, **dadurch gekennzeichnet, dass** der Schrumpfdruck größer ist als der innere Einbrenndruck.

4. Form nach einem der Ansprüche 1 bis 3, **dadurch gekennzeichnet, dass** sie ein starres, zylindrisches Rohr (19) aufweist, das um den Kranz herum geschrumpft ist.

5. Form nach einem der Ansprüche 1 bis 3, **dadurch gekennzeichnet, dass** sie ein gespanntes Kabel aufweist, das um den Kranz herum gewickelt ist.

6. Form nach einem der vorhergehenden Ansprüche, **dadurch gekennzeichnet, dass** der Neigungswinkel der kegelstumpfförmigen Ausladung (11) zwischen 6 und 20° beträgt.

7. Form nach einem der Ansprüche 1 bis 3, **dadurch gekennzeichnet, dass** eine Vorspannung auf den äußeren Kranz (10) aufgebracht wird, indem eine Konus gegen Konus Anordnung erstellt wird.

8. Form nach Anspruch 7, **dadurch gekennzeichnet, dass** der Neigungswinkel des Konus zwischen 3 und 25° beträgt.

9. Form nach einem der Ansprüche 7 oder 8, **dadurch gekennzeichnet, dass** sie Mittel zum Einstellen des Wertes der Vorspannung aufweist.

10. Form nach einem der vorhergehenden Ansprüche, **dadurch gekennzeichnet, dass** sie zwei Platten aufweist, die sich axial bewegen und Schalen (4, 5) tragen, die dazu bestimmt sind, die Flanken des Reifens zu formen.

11. Verfahren zum Formen eines Reifens mit Hilfe von einer Form nach einem der Ansprüche 1 bis 10, wobei eine Vorspannung auf den äußeren Kranz (10) aufgebracht wird, bevor die Form geschlossen wird.

## Claims

1. Tyre vulcanizing mould (1) comprising
- a plurality of segments (2) for moulding the outside of the tyre tread and which are able to move radially between a position in which the mould is open and a position in which the mould is closed, these segments having frustoconical bearing surfaces (11) placed radially on the outside, and
- an axially mobile external ring (10) which acts on the frustoconical bearing surfaces placed radially on the outside of the said segments (2) in order to cause them to close and to move back from their position of closure in the mould, **characterized in that** the said external ring (10) is radially preloaded towards the inside when the mould is in the open position.

2. Mould according to Claim 1, **characterized in that** the external ring (10) is a shrink-fit assembly.

3. Mould according to Claim 2, **characterized in that** the shrink-fitting pressure is higher than the internal curing pressure.

4. Mould according to one of Claims 1 to 3, **characterized in that** it comprises a rigid cylindrical tube (19) shrink-fitted around the said ring.

5. Mould according to one of Claims 1 to 3, **characterized in that** it comprises a taut cable wound around the said ring.

6. Mould according to one of the preceding claims, **characterized in that** the angle of inclination of the said frustoconical bearing surface (11) is comprised between 6 and 20°.

7. Mould according to one of Claims 1 to 3, **characterized in that** a preload is applied to the external ring (10) by creating a cone-to-cone assembly

8. Mould according to Claim 7, **characterized in that** the angle of inclination of the cone is comprised between 3 and 25°.

9. Mould according to one of Claims 7 and 8, **characterized in that** it comprises means for adjusting the amount of preload.

10. Mould according to one of the preceding claims, **characterized in that** it comprises two plates moving axially and supporting shells (4, 5) intended to mould the sidewalls of the tyre.

11. Method for moulding a tyre using a mould according to one of Claims 1 to 10, in which a preload is applied to the external ring (10) before the mould is closed.
